# EUROPÄISCHE PATENTANMELDUNG

(11) **EP 2 636 892 A2**
(43) Veröffentlichungstag der Anmeldung: **11.09.2013**
(21) Anmeldenummer: 13157906.2
(22) Anmeldetag: 05.03.2013
(51) Int. Cl.: F03D 3/02, F03D 3/06

(54) **Windkraftanlage und Verfahren zum Erzeugen von rotatorischer Energie durch Wind**

(30) Priorität: 05.03.2012 AT 500552012
(71) Anmelder: Leitl, Peter Adrian, 8010 Graz (AT)
(72) Erfinder: Leitl, Peter Adrian, 8010 Graz (AT)
(74) Vertreter: Wirnsberger, Gernot

(57) **Zusammenfassung**

Die Erfindung betrifft eine Windkraftanlage (1), umfassend einen Träger (2), mindestens zwei gleichsinnig umlaufende Rotoren (3) mit Rotorblättern (4), die Flügel (5) aufweisen, und zumindest eine Welle (7), durch welche die Rotoren (3) beidseitig des Trägers (2) am Träger (2) um Rotationsachsen (13) drehbar gelagert sind, wobei die Flügel (5) insbesondere ein Tragflächenprofil aufweisen. Erfindungsgemäß ist vorgesehen, dass die Rotationsachse (13) der Welle (7) aus einer Vertikalen ausgelenkt ist und die Flügel (5) im Wesentlichen auf einer gedachten Zylinderoberfläche um die Rotationsachsen (13) positioniert sind.

Weiter betrifft die Erfindung ein Verfahren zum Erzeugen von rotatorischer Energie durch Wind mit einer Windkraftanlage (1), wobei auf zumindest einer Welle (7) auf einem Träger (2) beidseitig des Trägers (2) gelagerte Rotoren (3) mit Rotorblättern (4), die Flügel (5) aufweisen, durch Windeinwirkung gleichsinnig rotiert werden. Erfindungsgemäß ist vorgesehen, dass die Rotoren (3) um eine aus einer Vertikalen ausgelenkte Rotationsachse (13) der Welle (7) mit im Wesentlichen auf einer gedachten Zylinderoberfläche um die Rotationsachse (13) angeordneten Flügeln (5) rotiert werden.

## Beschreibung

Die Erfindung betrifft eine Windkraftanlage, umfassend einen Träger, mindestens zwei gleichsinnig umlaufende Rotoren mit Rotorblättern, die Flügel aufweisen, und zumindest eine Welle, durch welche die Rotoren beidseitig des Trägers am Träger um Rotationsachsen drehbar gelagert sind, wobei die Flügel insbesondere ein Tragflächenprofil aufweisen.

Weiter betrifft die Erfindung ein Verfahren zum Erzeugen von rotatorischer Energie durch Wind mit einer Windkraftanlage, wobei auf zumindest einer Welle auf einem Träger beidseitig des Trägers gelagerte Rotoren mit Rotorblättern, die Flügel aufweisen, durch Windeinwirkung gleichsinnig rotiert werden.

Darüber hinaus betrifft die Erfindung ein Verfahren zum Ausnutzen von Geschwindigkeitsunterschieden in einer Grenzschicht beim Betreiben einer Windkraftanlage mit mindestens zwei Rotoren mit Rotorblättern.

Aus dem Stand der Technik sind verschiedene Windkraftanlagen sowie Verfahren bekannt geworden, die zur Erzeugung elektrischer Energie verwendet werden. So sind neben sogenannten Widerstandsläufern, die wie Windmühlen einen Luftwiderstand von Flügeln nutzen, auch Schnellläufer bekannt geworden. Bei Schnellläufern ist eine Flügelgeschwindigkeit, mit welcher die Flügel bewegt werden, höher als eine Windgeschwindigkeit und es wird ein Auftriebseffekt von Flügeln mit einem Tragflächenprofil ausgenutzt. Bei derartigen Windkraftanlagen ist eine Schnelllaufzahl λ, die ein Verhältnis von Flügelgeschwindigkeit zu Windgeschwindigkeit angibt, meist größer als 1.

Gegenwärtig werden zumeist Windkraftanlagen eingesetzt, die eine horizontale Rotationsachse und zumeist drei radial stehende Rotorblätter aufweisen. Aufgrund der Bauweise mit radialen Rotorblättern und Rotordurchmessern von teilweise mehr als 100 Metern, bauen derartige Windkraftanlagen sehr hoch, wodurch ein Landschaftsbild zumeist negativ beeinträchtigt wird. Darüber hinaus sind auch Bauformen von Rotoren bekannt geworden, bei denen die Rotorblätter eine axiale Erstreckung aufweisen und im Wesentlichen in Richtung einer zumeist vertikalen Rotationsachse stehen, wie beispielsweise ein sogenannter Darrieus-Rotor oder ein H-Darrieus-Rotor. Ein Verfahren, bei welchem mit einer derartigen Vorrichtung elektrische Energie erzeugt wird, weist den Nachteil eines geringen Wirkungsgrades auf. Darüber hinaus wird das Landschaftsbild durch derartige Windkraftanlagen mit zumeist vertikalen Rotorachsen ebenfalls beeinträchtigt. Dies wird auch als visuelle Umweltbelastung bezeichnet.

Aufgabe der Erfindung ist es, eine Windkraftanlage der eingangs genannten Art anzugeben, welche die Nachteile des Standes der Technik vermeidet oder zumindest reduziert und mit der insbesondere bei einer geringen Bauhöhe ein verbesserter Wirkungsgrad erzielbar ist.

Darüber hinaus soll ein Verfahren der eingangs genannten Art angegeben werden, das die Nachteile von derartigen Verfahren des Standes der Technik vermeidet oder zumindest reduziert.

Weiter soll ein Verfahren zum Ausnutzen von Geschwindigkeitsunterschieden in einer Grenzschicht beim Betreiben einer Windkraftanlage mit mindestens zwei Rotoren mit Rotorblättern angegeben werden, mit dem eine Effizienz einer Windkraftanlage erhöht werden kann.

Die erste Aufgabe wird erfindungsgemäß dadurch gelöst, dass bei einer Windkraftanlage der eingangs genannten Art die Rotationsachse der Welle aus einer Vertikalen ausgelenkt ist und die Flügel im Wesentlichen auf einer gedachten Zylinderoberfläche um die Rotationsachse positioniert sind.

Dadurch wird einerseits eine maximale Höhe der Windkraftanlage, die bevorzugt ortsfest angeordnet und als Schnellläuferwindkraftanlage mit einem λ größer als 1 ausgeführt ist, reduziert, wodurch das Landschaftsbild wesentlich weniger gestört wird, als bei bekannten Windkraftanlagen mit vertikalen Wellen oder Windkraftanlagen mit horizontalen Wellen mit radial stehenden Flügeln. Weiter ist es mit einer derartigen Windkraftanlage möglich, eine Grenzschicht der Luftströmung zu nutzen, die in Bodennähe auftritt. Innerhalb dieser Grenzschicht nimmt eine Windgeschwindigkeit mit zunehmender Höhe zu.

Bei einer Windkraftanlage mit Flügeln, die im Wesentlichen auf einer gedachten Zylinderoberfläche um eine Rotationsachse positioniert sind, wie dies beispielsweise auch beim H-Darrieus-Rotor der Fall ist, wird ein Drehmoment an der Welle durch eine Auftriebskraft der bevorzugt mit Tragflächenprofilen ausgeführten Flügeln hervorgerufen. Dabei ist die von einem Flügel hervorgerufene Kraft, die ein Drehmoment an der Welle erzeugt, unter anderem abhängig von der aktuellen Winkelposition des Flügels und üblicherweise innerhalb eines Winkelbereiches positiv, in welchem eine Bewegungsrichtung des Flügels entgegen einer Windrichtung gerichtet ist, und über den verbleibenden Bereich negativ. Die von einer derartigen Windkraftanlage abgegebene Leistung ergibt sich neben der Drehzahl aus dem Drehmoment, welches die Summe der über die einzelnen Winkelabschnitte von den Flügeln auf die Welle übertragenen Momente ist. Das Moment, das während der Bewegung des Flügels gegen die Windrichtung aufgrund des bevorzugt im Wesentlichen in Umfangsrichtung orientierten Tragflächenprofils hervorgerufen wird, ist betragsmäßig größer als jenes, welches in entgegengesetzter Richtung orientiert ist und bei Bewegung des Flügels in Windrichtung hervorgerufen wird. Daher kann eine derartige Windkraftanlage zwar eine positive Leistung abgeben, die allerdings immer um jene Leistung verringert ist, die bei Bewegung des Flügels in Windrichtung als Verlustleistung auftritt.

Eine erfindungsgemäße Windkraftanlage, die ein Ausnutzen der Grenzschicht erlaubt, weist einen höheren Wirkungsgrad auf, da in der Grenzschicht die Windgeschwindigkeit mit zunehmender Höhe ansteigt und dadurch die betragsmäßige Differenz zwischen positiver Leistung während Bewegen des Flügels entgegen der Windrichtung und Verlustleistung erhöht werden kann. Dadurch kann ein negatives Moment des Flügels auf die Welle reduziert oder je nach Strömungssituation gänzlich eliminiert werden. Eine Rotationsrichtung des Rotors wird bei Betrieb bevorzugt derart gewählt, dass ein Flügel, der aufgrund der aus der Vertikalen ausgelenkten Welle verschiedene Höhen durchläuft, an einem Scheitelpunkt, an dem der Flügel die maximale Höhe über einem Boden erreicht hat, entgegen der Windrichtung umläuft. Vorteil der im Wesentlichen oder ausschließlich auf einer gedachten Zylinderoberfläche um die Rotationsachse positionierten Flügel ist, dass ein Moment, welches ein Produkt aus hervorgerufener Auftriebskraft und Abstand zur Rotationsachse ist, über eine gesamte Flügellänge bei einem vorgegebenem Rotordurchmesser maximal ist. Im Gegensatz zu beispielsweise Darrieus-Rotoren wird dadurch über die gesamte axiale Erstreckung des Flügels ein gleichbleibend großes Moment hervorgerufen.

Es kann auch bevorzugt vorgesehen sein, dass die Flügel auf dem gedachten Zylinder zu einer Helix verdrillt angeordnet sind, um ein gleichmäßiges Drehmoment an der Welle über verschiedene Winkelpositionen der Rotoren hervorzurufen.

Um für wechselnde Wetterverhältnisse ausreichende Flexibilität bereitstellen zu können, hat es sich bewährt, dass die Rotoren um eine etwa vertikale Achse drehbar angeordnet sind, um die Rotoren bei drehendem Wind in Windrichtung nachzuführen. Dadurch kann die Windkraftanlage immer in Windrichtung ausgerichtet werden, sodass auch bei drehendem Wind ein wirkungsgradoptimaler Betrieb gewährleistet ist. Um eine Nachführung der Windkraftanlage in Windrichtung besonders einfach zu ermöglichen, ist bevorzugt vorgesehen, dass die Windkraftanlage genau einen Träger aufweist, der drehbar gelagert ist oder an dem die Welle mit den Rotoren drehbar gelagert ist, wobei die zumindest eine Welle bevorzugt an der Spitze des bevorzugt als gerader Mast ausgeführten Trägers gelagert ist. Die Anlage kann so auch vor Sturm geschützt werden, indem sie aus dem Wind gedreht wird. Dies ist ein weiterer Vorteil gegenüber Anlagen mit vertikalen Rotationsachsen, sogenannten Vertikalläufern.

Günstig ist es, wenn die Welle bzw. die Rotoren direkt am Träger gelagert sind. Dadurch ist eine Konstruktion gegenüber einer Ausführung vereinfacht, wobei die Welle nur indirekt am Träger gelagert ist, beispielsweise in einem mit dem Träger verbundenen Rahmen.

Um eine einfache Konstruktion zu erreichen, ist es weiter vorteilhaft, wenn die Welle bzw. die Rotoren auf einer fixen Höhe gelagert sind. Aufgrund eines Ausnutzens der Grenzschicht ist eine Ausführung mit einer auf einer variablen Höhe gelagerten Welle nicht erforderlich. Windkraftanlagen mit einer auf variabler Höhe gelagerten Welle weisen meist einen in vertikaler Richtung bewegbar mit dem Träger verbundenen Rahmen auf, in welchem die Welle drehbar gelagert ist, und sind daher sehr nur sehr aufwendig herstellbar.

Mit Vorteil weisen die Rotorblätter zur Welle hin eine im Wesentlichen geschlossene Kontur auf, wobei Stege vorgesehen und bevorzugt Ecken an Verbindungsstellen zwischen Flügeln und Stegen verrundet ausgebildet sind. Die Stege, die Kräfte und Momente von den Flügeln an die Welle übertragen, können einfach und günstig herstellbar ausgebildet sein, wohingegen die Flügel bevorzugt ein Tragflächenprofil aufweisen und in der Herstellung teurer sind. Aufgrund der geschlossenen Kontur weist der Rotor keine Flügelenden mit Spitzen auf, an denen wirkungsgradmindernde Wirbel, sogenannte Randwirbelverluste, entstehen würden. Die verrundeten Ecken der Verbindungsstellen haben ebenfalls den Vorteil, dass Randwirbelverluste an scharfen Kanten oder Ecken vermieden werden.

Besonders bevorzugt ist vorgesehen, dass die Rotoren H-förmig ausgebildet sind und bevorzugt die Flügel über die Stege mit der Welle verbunden sind. H-förmige Rotoren, insbesondere mit etwa parallel zur Rotationsachse verlaufenden Flügeln, weisen eine besonders gute Leistung unter Berücksichtigung eines vorgegebenen Bauraumes auf, da die Flügel über eine gesamte axiale Erstreckung ein gleichmäßiges Moment an die Welle abgeben können. Zur Vermeidung von Wirbeln können die H-förmig ausgebildeten Rotoren auch zur Welle hin als geschlossene Kontur ausgebildet sein. Mit derartigen Rotoren ist ein besonders geringer Bauraum möglich, wodurch die Beeinträchtigung des Landschaftsbildes weiter reduziert wird.

Es kann auch eine Windfahne zum Nachführen der Rotoren in Windrichtung vorgesehen sein. Dies ermöglicht ein Nachführen der Rotoren in Windrichtung auf besonders einfache und automatisierte Weise.

Bevorzugt kann es auch sein, dass die Rotationsachsen der Rotoren in einem Winkel von weniger als 45°, insbesondere weniger als 20°, bevorzugt weniger als 5°, zu einer Waagrechten angeordnet sind. Eine derartige Anordnung ermöglicht ein maximales Ausnutzen der Grenzschicht bei gleichzeitig minimaler Bauhöhe.

Vorteilhaft ist es, dass die Rotoren ein Verhältnis von einem Rotordurchmesser zu einer Rotorlänge zwischen 0,5 und 2, insbesondere zwischen 0,8 und 1,2, bevorzugt etwa 1, aufweisen. Dies ermöglicht einerseits eine geringe Durchbiegung der Rotoren und andererseits eine optimierte Materialbeanspruchung der Welle, die bevorzugt aus Stahl besteht.

Es kann bevorzugt vorgesehen sein, dass ein Verhältnis von einem Bodenabstand der Welle zum Rotordurchmesser weniger als 5, bevorzugt weniger als 3, insbesondere etwa 2, beträgt. Dadurch kann neben den Geschwindigkeitsunterschieden in der Grenzschicht auch ein Bodeneffekt genutzt werden, der aufgrund der relativen Bodennähe des Rotors eine gleichmäßigere Strömung und dadurch eine geringere Materialbeanspruchung zur Folge hat. Auch hat sich ein derartiges Verhältnis von Bodenabstand zu Rotordurchmesser als besonders günstig hinsichtlich einer visuellen Umweltbelastung erwiesen. Der Bodenabstand der Welle ist dabei der kleinste Abstand der Welle zum Boden, auf dem die Windkraftanlage befestigt ist. Die Welle ist bevorzugt an der Mastspitze gelagert, um den Bauraum der Windkraftanlage zu minimieren. Vorteilhaft ist es, wenn an der Mastspitze ein Generator angeordnet ist, der mit der Welle verbunden ist und in dem die rotatorische Energie der Rotoren in elektrische Energie umgewandelt wird.

Bevorzugt ist vorgesehen, dass ein Regelkreis vorgesehen ist, mit dem die Rotoren in Windrichtung ausrichtbar sind. Damit kann eine Nachführung in Windrichtung auch bei schwachen Winden besonders einfach und hochgenau erfolgen, wenn die Windrichtung gemessen wird, um die Windkraftanlage immer in einem optimalen Bereich zu betreiben.

Es ist von Vorteil, dass die Rotoren jeweils drei um etwa 120° versetzte Rotorblätter aufweisen. Dies hat sich besonders bewährt, um zum einen ein gleichmäßiges Drehmoment an der Welle und zum anderen minimale Materialkosten bei einer Herstellung zu erzielen. Es ist allerdings auch möglich, die Anlage mit beispielsweise zwei oder auch mehr als drei Rotorblättern zu betreiben, wobei die Rotorblätter bevorzugt immer etwa äquidistant zueinander beabstandet positioniert sind.

Die zweite Aufgabe wird erfindungsgemäß dadurch gelöst, dass bei einem Verfahren der eingangs genannten Art die Rotoren um eine aus einer Vertikalen ausgelenkte Rotationsachse der Welle mit im Wesentlichen auf einer gedachten Zylinderoberfläche um die Rotationsachse angeordneten Flügeln rotiert werden.

Mit dem erfindungsgemäßen Verfahren kann bei geringer Bauhöhe elektrische Energie durch Wind gewonnen werden. Dass die Flügel auf einer gedachten Zylinderoberfläche positioniert sind, hat insbesondere den Vorteil, dass das von einem Flügel auf die Welle übertragene Moment über die gesamte Flügellänge einen maximalen Wert aufweist, da der Abstand zwischen Flügel und Welle immer gleich groß ist. Dadurch wird bei geringer Bauhöhe ein Maximum an elektrischer Leistung erzeugt. Die aus der Vertikalen ausgelenkte Rotationsachse ermöglicht eine besonders geringe Bauhöhe, insbesondere im Vergleich mit herkömmlichen Darrieus-Rotoren mit vertikaler Achse, wodurch die visuelle Umweltbelastung reduziert wird.

Zweckmäßigerweise ist vorgesehen, dass die Rotoren mit einem derartigen Abstand zum Boden betrieben werden, dass ein effizienzsteigernder Bodeneffekt ausgenutzt wird. Der Bodeneffekt ergibt sich dabei aus einer beruhigten Strömung in Bodennähe, die reduzierte Turbulenzen und damit eine gleichmäßigere und dadurch reduzierte Materialbeanspruchung sowie einen verbesserten Wirkungsgrad hervorruft. Gleichzeitig wird dadurch eine Verlustleistung, die von einem von den Flügeln bei einer Bewegung in Windrichtung hervorgerufenen Gegenmoment verursacht wird, minimiert, wodurch der Wirkungsgrad verbessert wird.

Besonders bevorzugt ist vorgesehen, dass die Rotoren in einer Grenzschicht betrieben werden, innerhalb der eine Geschwindigkeit in einem oberen Bereich größer ist als in einem unteren Bereich. Dadurch wird die Verlustleistung, die bei der Bewegung der Flügel in Windrichtung hervorgerufen wird, weiter reduziert. Die Rotoren werden dabei bevorzugt derart rotiert, dass diese an einem Scheitelpunkt eine Bewegung etwa entgegen der Windrichtung durchführen, wobei der Scheitelpunkt den höchsten Punkt bezeichnet, den ein Flügel bei einer Rotation um die Rotationsachse durchläuft.

Es kann auch vorgesehen sein, dass die Rotoren um eine vertikale Achse einer Windrichtung nachgeführt werden. Dadurch kann das Verfahren auch bei wechselnder Windrichtung zur Energiegewinnung eingesetzt werden.

Die dritte Aufgabe wird dadurch gelöst, dass bei einem Verfahren zum Ausnutzen von Geschwindigkeitsunterschieden in einer Grenzschicht beim Betreiben einer Windkraftanlage mit mindestens zwei Rotoren mit Rotorblättern die Rotorblätter derart angestellt, beabstandet und positioniert werden, dass bei Rotation des Rotors ein Gegenmoment der Rotorblätter aufgrund unterschiedlicher Strömungsgeschwindigkeiten in der Grenzschicht über einen Rotorumfang reduziert wird. Die Rotorblätter bringen während einer Umdrehung um die Rotationsachse nur über einen begrenzten Winkelbereich ein positives Moment auf die Welle auf, während im restlichen Winkelbereich ein Momentenbeitrag der Flügel auf die Welle negativ ausfällt. Eine abgegebene Leistung der Windkraftanlage ist somit neben einer Umdrehungsgeschwindigkeit des Rotors von einer Summe der von den Rotorblättern auf die Welle übertragenen Momente über eine gesamte Umdrehung abhängig, wobei der Anteil der negativen Momente als Gegenmoment bezeichnet werden kann, das eine Verlustleistung verursacht. Dieses Gegenmoment tritt in einem Bereich auf, in dem die Bewegung des Flügels zumindest teilweise in Windrichtung gerichtet ist. Durch erfindungsgemäßes Ausnutzen der Geschwindigkeitsunterschiede wird dieses Gegenmoment reduziert und damit der Wirkungsgrad des Verfahrens gesteigert. Bei Betreiben der Windkraftanlage in der Grenzschicht wird die Windkraftanlage bevorzugt derart positioniert, dass die Welle etwa parallel zum Boden angeordnet ist und der Rotor derart umläuft, dass die Flügel am Scheitelpunkt etwa eine Geschwindigkeit aufweisen, die entgegen der Windrichtung gerichtet ist. Dadurch weisen die Flügel an einem untersten Punkt eine Bewegungsrichtung auf, welche der Windrichtung entspricht, wodurch das Gegenmoment, das in diesem Bereich hervorgerufen wird, aufgrund der geringen Windgeschwindigkeit in einem unteren Bereich der Grenzschicht minimiert wird. Bevorzugt ist auch vorgesehen, dass die Rotoren der Windrichtung nachgeführt werden, um auch bei einem drehenden Wind kontinuierlich elektrische Energie zu erzeugen.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 eine erfindungsgemäße Windkraftanlage in perspektivischer Darstellung;
Fig. 2 eine erfindungsgemäße Windkraftanlage in Seitenansicht;
Fig. 3 eine Prinzipdarstellung von Geschwindigkeitsvektoren einer Windkraftanlage an verschiedenen Umlaufpositionen eines Flügels einer Windkraftanlage des Standes der Technik.

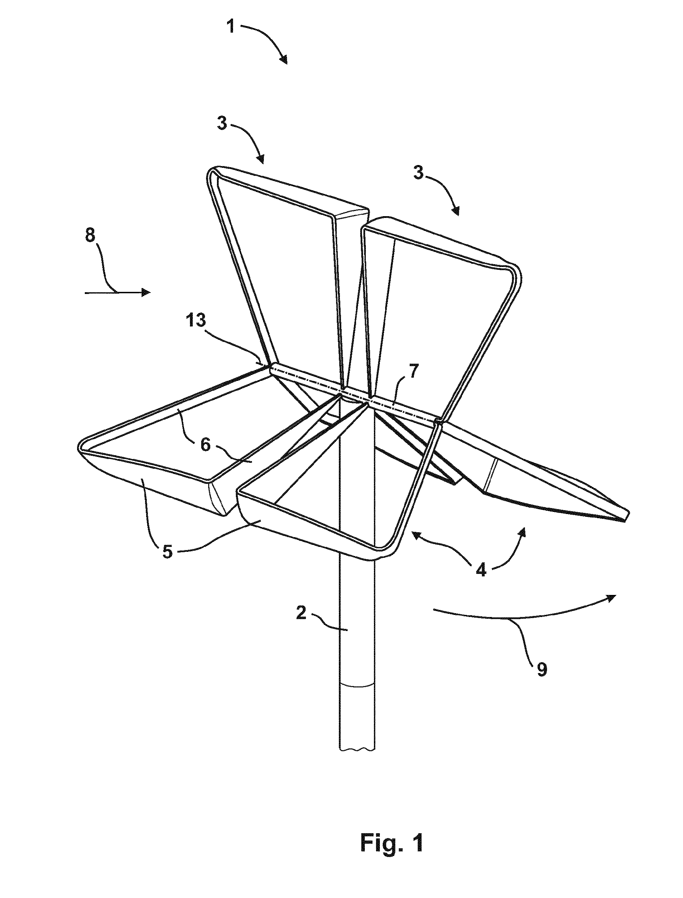

Fig. 1 zeigt eine schematische Darstellung einer Windkraftanlage 1 zum Erzeugen von elektrischer Energie durch Wind, wobei eine Welle 7 direkt auf einem Träger 2 gelagert ist, an der zwei Rotoren 3 beidseitig des Trägers 2 befestigt sind, vorzugsweise in einer vertikalen Richtung unbewegbar. Bei der dargestellten Ausführungsvariante weist jeder Rotor 3 drei Rotorblätter 4 auf, die Stege 6 und Flügel 5 umfassen, wobei die Flügel 5 der Rotorblätter 4 ein Tragflächenprofil aufweisen und über die Stege 6 mit der drehbar an einer Trägerspitze gelagerten Welle 7 verbunden sind. Um eine möglichst niedrige Bauhöhe zu erreichen, ist die Welle 7 horizontal angeordnet, wobei auch geringfügige Abweichungen aus einer Horizontalen von bis zu 45° möglich sind. Eine Rotationsrichtung 9 der Rotoren 3 ist bei der Ausführungsvariante derart festgelegt, dass die Flügel 5, die bei einer Umdrehung um eine für beide Rotoren 3 gemeinsame Rotationsachse 13 verschiedene Bodenabstände durchlaufen, an einem Scheitelpunkt, an dem ein Abstand der Flügel 5 zu einem Boden maximal ist, eine Geschwindigkeit aufweisen, die genau entgegen einer Windrichtung 8 gerichtet ist. Dadurch lassen sich Geschwindigkeitsunterschiede, die in einer bodennahen Grenzschicht vorherrschen und zu einer Geschwindigkeitszunahme mit zunehmendem Bodenabstand führen, besonders günstig ausnutzen. Ein Wirkungsgrad wird dadurch erhöht, dass ein Gegenmoment, das bei einem Rotieren der Flügel 5 in Windrichtung 8 auftritt, wie dies in einem unteren Bereich der Rotoren 3 während einer Umdrehung zwangsläufig stattfindet, reduziert und gleichzeitig eine Verlustleistung minimiert wird. Dieses Gegenmoment ist neben einer Windgeschwindigkeit und Windrichtung 8 auch von einem Anstellwinkel eines Tragflächenprofils der Flügel 5 abhängig, der bevorzugt fix eingestellt und während einer Umdrehung nicht geändert wird, um eine Wartungsintensität gering zu halten. Eine Anstellung der Flügel 5 sowie ein Abstand der Flügel 5 zueinander und eine konkrete Ausgestaltung der geometrischen Parameter kann bevorzugt je nach Anwendungsgebiet der Windkraftanlage 1 mittels numerischen Simulationen optimiert werden, sodass das Gegenmoment örtlichen Gegebenheiten angepasst minimiert wird. Um auch bei drehenden Winden elektrische Energie erzeugen zu können, ist die erfindungsgemäße Windkraftanlage 1 derart ausgeführt, dass die Rotoren 3 der Windrichtung 8 nachführbar sind. Dazu ist vorgesehen, dass die Welle 7 um eine vertikale Achse drehbar gelagert ist, wobei bevorzugt, die Mastspitze um einen restlichen Teil des Trägers 2 gedreht wird. Es kann allerdings auch vorgesehen sein, dass der gesamte Träger 2, auf dem die Welle 7 angeordnet ist, gegenüber einem Boden drehbar um eine vertikale Achse gelagert ist. Zum Erzeugen elektrischer Energie ist die Welle 7 mit einem elektrischen Generator verbunden, der bevorzugt auch an der Spitze des Trägers 2 gelagert ist, wobei allerdings auch eine Ableitung der mechanischen Energie, beispielsweise über ein Getriebe, zu einem an einem Fuß des Trägers 2 angeordneten Generator möglich ist. Bei der Ausführungsvariante ist die Welle 7 aus einem Metall, bevorzugt einem Stahl, und die Flügel 5 sowie die Stege 6 aus einem Faserverbundwerkstoff, bevorzugt einem Kohlefaserverbundwerkstoff, ausgebildet. Der Träger 2 kann sowohl aus einem Metall als auch aus einem hochfesten Verbundwerkstoff ausgebildet sein, der geeignet ist, die auftretenden, insbesondere wechselnden, Kräfte und Momente aufzunehmen. In der dargestellten Ausführungsvariante sind die Rotorblätter 4 derart ausgebildet, dass die Flügel 5 etwa auf einer Zylinderoberfläche um die Rotorachse positioniert und während einer Bewegung auf dieser Zylinderoberfläche bewegbar sind, um über eine gesamte Länge der Flügel 5 ein gleichbleibend hohes Moment erzeugen und an die Welle 7 übertragen zu können. Es kann allerdings auch vorgesehen sein, dass die Flügel 5 nicht wie dargestellt etwa parallel zur Rotationsachse 13, sondern zu einer Helix verdrillt ausgeführt sind, um ein möglichst gleichmäßiges Moment an die Welle 7 abzugeben und somit eine mechanische Lebensdauer der einzelnen Bauteile zu erhöhen. Vorteilhaft ist es, dass die Rotorblätter 4 wie dargestellt mit der Welle 7 eine geschlossene Kontur einschließen, sodass keine offenen Enden mit Spitzen vorhanden sind, an denen sich Wirbel bilden könnten, welche den Wirkungsgrad reduzieren würden. Aus demselben Grund sind auch die Kanten an den Verbindungsstellen zwischen den Flügeln 5 und den Stegen 6 verrundet, wodurch sich ein besonders hoher Wirkungsgrad der Windkraftanlage 1 ergibt.

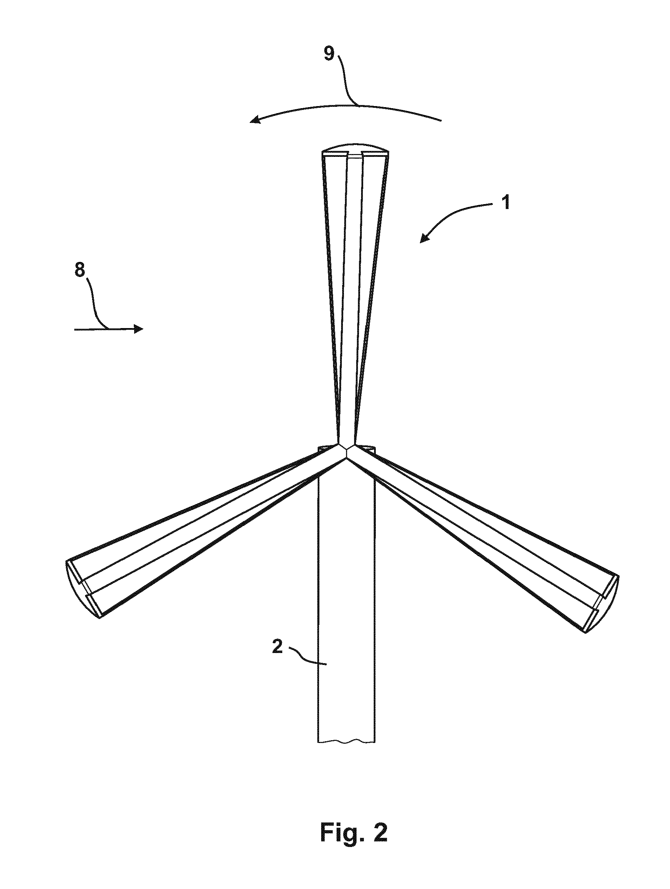

Fig. 2 zeigt eine erfindungsgemäße Windkraftanlage 1 in Seitenansicht, wobei die ausgeführten drei Rotorblätter 4 je Rotor 3 besonders gut ersichtlich sind. Um eine symmetrische Belastung sowie ein gleichbleibendes Moment zu erzielen, sind die drei Rotorblätter 4 gleichmäßig voneinander beabstandet und um etwa 120° zueinander versetzt angeordnet. Für ein Optimum aus Materialeinsatz und erzielbarer Leistung hat sich eine Ausbildung der Windkraftanlage 1 mit zwei Rotoren 3 mit jeweils drei Rotorblättern 4 bewährt, wobei auch eine Ausführung mit nur zwei oder mehr als drei Rotorblättern 4 vorgesehen sein kann. Bevorzugt sind die Rotoren 3 beidseitig des Trägers 2 gelagert, um eine symmetrische Belastung des Trägers 2 zu gewährleisten und eine Nachführbarkeit der Rotoren 3 in Windrichtung 8 um eine vertikale Achse, die durch den vertikalen Träger 2 verläuft, besonders einfach ausführen zu können. Im Ausführungsbeispiel sind die Rotoren 3 auf einer gemeinsamen Welle 7 auf dem Träger 2 um eine gemeinsame Rotationsachse 13 gelagert, es ist allerdings auch die separate Lagerung auf einzelnen Wellen 7 und auch um separate Rotationsachsen drehbar möglich, um beispielsweise bei Ausfall eines Rotors 3 noch eine eingeschränkte Anlagenverfügbarkeit gewährleisten zu können. Jeder Rotor 3 der abgebildeten Windkraftanlage 1 weist eine axiale Erstreckung von etwa 5 Metern sowie einen Durchmesser von ebenfalls 5 Metern auf. Günstig ist es, wenn ein Verhältnis von einer Rotorlänge zu einem Rotordurchmesser zwischen 0,5 und 2 liegt. Die Welle 7 des abgebildeten Ausführungsbeispiels ist in einer Höhe von etwa 10 Metern über dem Boden positioniert, sodass eine Bauhöhe gering gehalten werden kann, wodurch verglichen mit Windkraftanlagen des Standes der Technik eine visuelle Umweltbelastung minimiert wird. Selbstverständlich wird der erfindungsgemäße Effekt auch bei von vorstehend beschriebenen Abmessungen abweichenden Parametern erreicht. So kann die Anlage auch mit einer Höhe von wesentlich mehr als 15 Metern ausgeführt sein. Insbesondere um eine visuelle Umweltbelastung gering zu halten, hat sich ein Rotordurchmesser von weniger als 15 Metern besonders bewährt. Der Rotordurchmesser ist dabei der Durchmesser des gedachten Zylinders, auf dem die Flügel 5 angeordnet sind; als Rotorlänge ist die Länge der Flügel 5 auf dem gedachten Zylinder je Rotor 3 anzusehen.

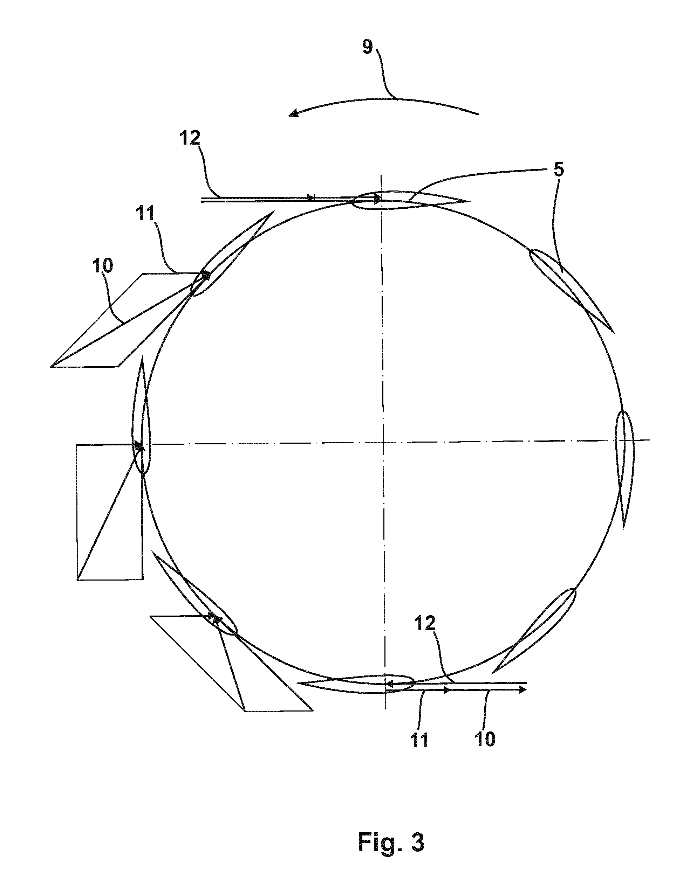

Fig. 3 zeigt demonstrativ Geschwindigkeitsverhältnisse an den Flügeln 5 an verschiedenen Winkelpositionen eines herkömmlichen Rotors 3, beispielsweise eines Darrieus-Rotors, der wie bei Windkraftanlagen des Standes der Technik üblich eine vertikale Achse aufweist. Wie abgebildet, ergibt sich eine Relativgeschwindigkeit 10 der Flügel 5, die ein Tragflächenprofil aufweisen, gegenüber der Strömung aus einer vektoriellen Addition einer Strömungsgeschwindigkeit 12, die sich aus einer Rotation der Flügel 5 um die Rotationsachse 13 ergibt, und einer Windgeschwindigkeit 11. Diese Relativgeschwindigkeit 10 wird an einem Punkt maximal, an welchem eine Flügelgeschwindigkeit entgegen der Windrichtung 8 gerichtet ist. Dort ist die aufgrund der Rotation auf den Flügel 5 wirkende Strömungsgeschwindigkeit 12, welche gleich der negativen Flügelgeschwindigkeit ist, in Richtung der Windgeschwindigkeit 11 orientiert, weswegen an diesem Punkt auch ein Betrag der Relativgeschwindigkeit 10 die Summe der Beträge von Flügelgeschwindigkeit und Windgeschwindigkeit 11 ist. Bei einer erfindungsgemäßen Windkraftanlage 1 liegt dieser Punkt an einem Scheitelpunkt, an dem die Flügel 5 einen maximalen Abstand zum Boden erreichen, wobei ein maximales Moment von den Flügeln 5 auf die Welle 7 übertragen wird. In einem Bereich, in dem die Flügelgeschwindigkeit in Richtung einer Windgeschwindigkeit 11 gerichtet ist, ist ein von den Flügeln 5 auf die Welle 7 übertragbares Moment negativ, weswegen in diesem Bereich eine Verlustleistung für die Windkraftanlage 1 entsteht.

Bei dem erfindungsgemäßen Verfahren, bei dem die Windkraftanlage 1 derart in einer Grenzschicht positioniert wird, dass die Windgeschwindigkeit 11 im Gegensatz zum dargestellten Verfahren des Standes der Technik in einem unteren Bereich geringer ist als in einem oberen Bereich, wird das im unteren Bereich hervorgerufene negative Moment und damit die Verlustleistung minimiert und somit der Gesamtwirkungsgrad der Windkraftanlage 1 erhöht. Bevorzugt wird die Rotationsrichtung 9 derart gewählt, dass die Flügel 5 am Scheitelpunkt eine Flügelgeschwindigkeit aufweisen, die etwa entgegen der Windgeschwindigkeit 11 gerichtet ist und an einem Punkt, an dem die Flügel 5, der gleichsinnig drehenden Rotoren 3, den geringsten Abstand zum Boden aufweisen, die Flügelgeschwindigkeit in Richtung der Windgeschwindigkeit 11 gerichtet ist, weswegen die Strömungsgeschwindigkeit 12 aufgrund der Rotation der Windgeschwindigkeit 11 entgegengerichtet ist und die Relativgeschwindigkeit 10 minimiert wird. Dadurch werden das Gegenmoment und damit die Verlustleistung reduziert. Es kann allerdings auch vorgesehen sein, die Windkraftanlage 1 mit inverser Rotationsrichtung 9 zu betreiben, sodass die Flügel 5 der Rotoren 3 in Bodennähe eine Flügelgeschwindigkeit aufweisen, die etwa entgegen der Windgeschwindigkeit 11 gerichtet ist, und am Scheitelpunkt die Flügelgeschwindigkeit etwa in Richtung der Windgeschwindigkeit 11 gerichtet ist.

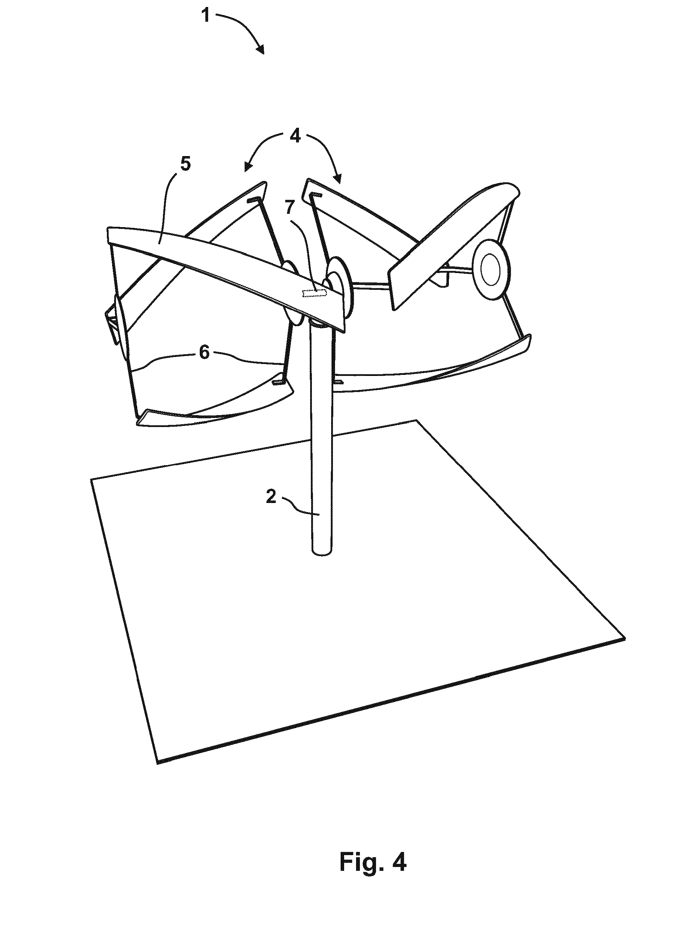

Fig. 4 zeigt eine weitere Ausführungsvariante einer erfindungsgemäßen Windkraftanlage 1 mit ebenfalls im Wesentlichen auf einer gedachten Zylinderoberfläche angeordneten Flügeln 5 von Rotorblättern 4. Bei dieser Ausführungsvariante sind ebenfalls zwei, beidseits des Trägers 2 angeordnete Rotoren 3 mit jeweils drei Rotorblättern 4 vorgesehen, wobei die Rotorblätter 4 zu einer Helix verdrillt angeordnet sind. Diese Ausführung hat insbesondere den Vorteil, dass ein Drehmoment, das auf die Welle 7 wirkt, gleichmäßig aufgebracht wird und zeitliche Schwankungen nahezu eliminiert werden. Ein Verdrillungswinkel wird dabei bevorzugt wieder in numerischen Simulationen optimiert und an den jeweiligen Anwendungsfall angepasst. Besonders bewährt hat sich ein Verdrillungswinkel, der, wie im Ausführungsbeispiel ersichtlich ist, etwa einer Hälfte eines Winkelabstandes der einzelnen Rotorblätter 4 entspricht. Dadurch wird ein besonders gleichmäßiger Drehmomentenverlauf und eine geringe Materialbeanspruchung erreicht. Bei dieser Ausführungsvariante wird eine besonders hohe Materialausnutzung dadurch erreicht, dass die gemeinsame Welle 7 beider Rotoren 3 eine kürzere axiale Erstreckung als die Rotoren 3 aufweist und nur an einer Seite jedes Rotors 3 befestigt ist. Die bevorzugt leicht und insbesondere aus einem hochfesten Faserverbundmaterial ausgeführten Flügel 5 weisen dabei eine selbsttragende Wirkung auf. Dies ermöglicht es, einen Herstellungsaufwand der Windkraftanlage 1 weiter zu reduzieren.

## Patentansprüche

1. Windkraftanlage, umfassend einen Träger (2), mindestens zwei gleichsinnig umlaufende Rotoren (3) mit Rotorblättern (4), die Flügel (5) aufweisen, und zumindest eine Welle (7), durch welche die Rotoren (3) beidseitig des Trägers (2) am Träger (2) um Rotationsachsen (13) drehbar gelagert sind, wobei die Flügel (5) insbesondere ein Tragflächenprofil aufweisen, **dadurch gekennzeichnet, dass** die Rotationsachse (13) der Welle (7) aus einer Vertikalen ausgelenkt ist und die Flügel (5) im Wesentlichen auf einer gedachten Zylinderoberfläche um die Rotationsachsen (13) positioniert sind.

2. Windkraftanlage (1) nach Anspruch 1, **dadurch gekennzeichnet, dass** die Rotoren (3) um eine etwa vertikale Achse drehbar angeordnet sind, um die Rotoren (3) bei drehendem Wind in Windrichtung (8) nachzuführen.

3. Windkraftanlage (1) nach einem der Ansprüche 1 oder 2, **dadurch gekennzeichnet, dass** die Rotorblätter (4) zur Welle (7) hin eine im Wesentlichen geschlossene Kontur aufweisen, wobei Stege (6) vorgesehen und bevorzugt Ecken an Verbindungsstellen zwischen Flügeln (5) und Stegen (6) verrundet ausgebildet sind.

4. Windkraftanlage (1) nach einem der Ansprüche 1 bis 3, **dadurch gekennzeichnet, dass** die Rotoren (3) H-förmig ausgebildet sind und bevorzugt die Flügel (5) über die Stege (6) mit der Welle (7) verbunden sind.

5. Windkraftanlage (1) nach einem der Ansprüche 1 bis 4, **dadurch gekennzeichnet, dass** eine Windfahne zum Nachführen der Rotoren (3) in Windrichtung (8) vorgesehen ist.

6. Windkraftanlage (1) nach einem der Ansprüche 1 bis 5, **dadurch gekennzeichnet, dass** die Rotationsachsen (13) der Rotoren (3) in einem Winkel von weniger als 45°, insbesondere weniger als 20°, bevorzugt weniger als 5°, zu einer Waagrechten angeordnet sind.

7. Windkraftanlage (1) nach einem der Ansprüche 1 bis 6, **dadurch gekennzeichnet, dass** die Rotoren (3) ein Verhältnis von einem Rotordurchmesser zu einer Rotorlänge zwischen 0,5 und 2, insbesondere zwischen 0,8 und 1,2, bevorzugt etwa 1, aufweisen.

8. Windkraftanlage (1) nach einem der Ansprüche 1 bis 7, **dadurch gekennzeichnet, dass** ein Verhältnis von einem Bodenabstand der Wellen (7) zum Rotordurchmesser weniger als 5, bevorzugt weniger als 3, insbesondere etwa 2, beträgt.

9. Windkraftanlage (1) nach einem der Ansprüche 1 bis 8, **dadurch gekennzeichnet, dass** ein Regelkreis vorgesehen ist, mit dem die Rotoren (3) in Windrichtung (8) ausrichtbar sind.

10. Windkraftanlage (1) nach einem der Ansprüche 1 bis 9, **dadurch gekennzeichnet, dass** die Rotoren (3) jeweils drei um etwa 120° versetzte Rotorblätter (4) aufweisen.

11. Verfahren zum Erzeugen von rotatorischer Energie durch Wind mit einer Windkraftanlage (1), wobei auf zumindest einer Welle (7) auf einem Träger (2) beidseitig des Trägers (2) gelagerte Rotoren (3) mit Rotorblättern (4), die Flügel (5) aufweisen, durch Windeinwirkung gleichsinnig rotiert werden, **dadurch gekennzeichnet, dass** die Rotoren (3) um eine aus einer Vertikalen ausgelenkte Rotationsachse (13) der Welle (7) mit im Wesentlichen auf einer gedachten Zylinderoberfläche um die Rotationsachse (13) angeordneten Flügeln (5) rotiert werden.

12. Verfahren nach Anspruch 11, **dadurch gekennzeichnet, dass** die Rotoren (3) mit einem derartigen Abstand zu einem Boden betrieben werden, dass ein effizienzsteigernder Bodeneffekt ausgenutzt wird.

13. Verfahren nach Anspruch 11 oder 12, **dadurch gekennzeichnet, dass** die Rotoren (3) in einer Grenzschicht, innerhalb der eine Geschwindigkeit in einem oberen Bereich größer ist als in einem unteren Bereich, betrieben werden.

14. Verfahren nach einem der Ansprüche 11 bis 13, **dadurch gekennzeichnet, dass** die Rotoren (3) um eine vertikale Achse einer Windrichtung (8) nachgeführt werden.

15. Verfahren zum Ausnutzen von Geschwindigkeitsunterschieden in einer Grenzschicht beim Betreiben einer Windkraftanlage (1) mit mindestens zwei Rotoren (3) mit Rotorblättern (4), insbesondere nach einem Verfahren nach einem der Ansprüche 11 bis 14, **dadurch gekennzeichnet, dass** die Rotorblätter (4) derart angestellt, beabstandet und positioniert werden, dass bei Rotation des Rotors (3) ein Gegenmoment der Rotorblätter (4) aufgrund unterschiedlicher Strömungsgeschwindigkeiten (12) in der Grenzschicht über einen Rotorumfang reduziert wird.
